(19) **Europäisches Patentamt**

**European Patent Office**

**Office européen des brevets**

(11) **EP 1 097 834 A2**

(12) **EUROPEAN PATENT APPLICATION**

(43) Date of publication:
09.05.2001 Bulletin 2001/19

(51) Int. Cl.⁷: **B60K 41/04**, F02D 35/00,
F16F 15/00

(21) Application number: **00121973.2**

(22) Date of filing: **09.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.11.1999 JP 31722599**

(71) Applicant:
**TOYOTA JIDOSHA KABUSHIKI KAISHA
Aichi-ken 471-8571 (JP)**

(72) Inventors:
• **Hattori, Yuji,
Toyota Jidosha K.K.
Toyota-shi, Aichi-ken, 471-8571 (JP)**
• **Kondo, Hiroki,
Toyota Jidosha K.K.
Toyota-shi, Aichi-ken, 471-8571 (JP)**

• **Matsumoto, Shogo,
Toyota Jidosha K.K.
Toyota-shi, Aichi-ken, 471-8571 (JP)**
• **Hayakawa, Kisaburo,
K.K. Toyota Chuo Kenkyusho
Aichi-gun, Aichi-ken, 480-1192 (JP)**
• **Hibino, Ryoichi,
K.K. Toyota Chuo Kenkyusho
Aichi-gun, Aichi-ken, 480-1192 (JP)**
• **Osawa, Masataka,
K.K. Toyota Chuo Kenkyusho
Aichi-gun, Aichi-ken, 480-1192 (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(54) **Vehicle drive train torsional vibration control apparatus**

(57) In a rotational vibration control apparatus for suppressing rotational vibration of a drive train of a motor vehicle, a vibrational component of rotational vibration of the drive train is detected, which component is included in a certain vehicle state quantity including at least one of the torque of an output shaft, acceleration in a longitudinal direction of the vehicle, the speed of rotation of an input shaft of a transmission, and the speed of rotation of an output shaft of the transmission, and at least one of the engine torque and the change gear ratio is changed based on the detected vibrational component of the rotational vibration.

**F I G. 1**

EP 1 097 834 A2

**Description**

BACKGROUND OF THE INVENTION

1. Field of the Invention

The present invention relates to an apparatus for suppressing rotational vibration generated in a drive train of a motor vehicle.

2. Description of Related Art

Japanese Laid-open Patent Publication (Kokai) No. HEI 3-271537 discloses a known technique for suppressing torsional vibration that occurs in a drive train when an accelerator pedal is depressed. In this publication, it is proposed to control the throttle opening, using a pre-compensator that is set based on an inverse system of inherent transfer characteristics of a particular vehicle (the vehicle in question) between the throttle opening and the driving torque, and transfer characteristics of a target vehicle between the accelerator pedal position and the driving torque, thereby to suppress torsional vibration and improve response characteristics.

Another technique for suppressing torsional vibration of a drive train is disclosed in the Collection of Presentation Manuscripts No. 9-99, p. 5-8 for the JSAE Technical Lecture. This technique is used for suppressing torsional vibration that occurs especially when the accelerator pedal is depressed in a low-speed and coasting state, so that the torque converter can lock up in a lower speed range for improvement of the fuel economy. With this technique, an electronic throttle is controlled using a model matching compensator having frequency characteristics for damping only a natural frequency (resonance frequency) range of a model that is a linear approximation of a vehicle including an engine-transmission system.

The transfer characteristics of rotational vibration in the engine-transmission system vary depending upon, for example, operating temperatures, atmospheric pressure, changes in the weight, or chronological changes. The transfer characteristics also differ among individual products. Since a control system has been conventionally designed without taking account of these variations, the control performance inevitably deteriorates due to the variations in the above transfer characteristics. Namely, it has been difficult to provide vibration suppression control that is stably performed over a long period of use under various operating conditions.

In the case where the vibration control system (the throttle opening control apparatus) as described above is a multiple-input system that receives a plurality of inputs, such as engine torque and change gear ratio, the inputs may interfere with each other, thus making it impossible to easily set a compensator that has been used in the art.

SUMMARY OF THE INVENTION

It is an object of the present invention to provide a vehicle drive train rotational vibration control apparatus which is simple in construction and provides a stable vibration suppressing effect.

To accomplish the above object, the present invention provides a rotational vibration control apparatus for suppressing rotational vibration of a drive train of a motor vehicle, comprising a rotational vibration detector that detects a vibrational component of rotational vibration of the drive train, the vibrational component being included in a certain vehicle state quantity comprising at least one of a torque of an output shaft, an acceleration in a longitudinal direction of the vehicle, a speed of rotation of an input shaft of a transmission, and a speed of rotation of an output shaft of the transmission; and a rotational vibration suppressing unit that changes at least one of an engine torque and a change gear ratio, based on the vibrational component of the rotational vibration detected by the rotational vibration detecting unit.

In the control apparatus constructed according to the present invention, the vibrational component of rotational vibration is extracted, and the rotational vibration is suppressed by reducing the extracted vibrational component. With the apparatus thus constructed, there is no need to set target paths for the above-indicated vehicle state quantities, such as the torque of the output shaft.

In one preferred form of the present invention, the rotational vibration control apparatus further includes a vehicle state quantity detecting unit that detects at least one vehicle state quantity including the certain vehicle state quantity. In this apparatus, the rotational vibration detecting unit comprises a model vehicle state quantity determining unit that calculates the certain vehicle state quantity, based on a rigid model of the vehicle drive train, and a state quantity comparing unit that determines the vibrational component of the rotational vibration, by comparing the certain vehicle state quantity generated from the vehicle state quantity detecting unit with the certain vehicle state quantity generated from the model vehicle state quantity determining unit.

In another preferred form of the invention, the rotational vibration detecting unit is constructed based on a physical model of the vehicle drive train, and includes an observer that observes the vibrational component of the rotational vibration included in the certain vehicle state quantity.

In a further preferred form of the invention, the rotational vibration suppressing unit changes the engine torque or the change gear ratio, in view of variations in response characteristics of the engine or the transmission, respectively. In this case, a robust control system can be designed in view of variations in response characteristics of the engine-transmission system.

In a still further preferred form of the invention, the rotational vibration suppressing unit changes a controller of a control system depending upon the change gear ratio. With the controller thus changed depending upon the change gear ratio, a non-linear characteristic that varies with the change gear ratio is taken into consideration.

## BRIEF DESCRIPTION OF THE DRAWINGS

The foregoing and further objects, features and advantages of the present invention will become apparent from the following description of preferred embodiments with reference to the accompanying drawings, wherein:

Fig. 1 is a control block diagram schematically showing a vehicle drive train rotational vibration control apparatus constructed according to one preferred embodiment of the present invention;

Fig. 2 is a schematic view showing an example of a rotational vibration detecting unit, which is adapted to detect a vibrational component of the rotational vibration, using a rigid model;

Fig. 3 is a schematic view of a simplified physical model of a vehicle system to be controlled;

Fig. 4 is a schematic view showing an example of a rotational vibration detecting unit, which is adapted to detect a vibrational component of the rotational vibration, using an observer constructed based on a vibrational component model;

Fig. 5 is a block diagram of a control system according to the preferred embodiment of the present invention;

Fig. 6 is a block diagram of a simulation model of a motor vehicle that is constructed as including an engine and a continuously variable transmission;

Figs. 7A, 7B and 7C are graphs showing simulation results during shifting of the transmission in an ideal control system that is free from variations in the object to be controlled; and

Figs. 8A, 8B and 8C are graphs showing simulation results during shifting of the transmission in a control system in which the object to be controlled is subjected to variations.

## DETAILED DESCRIPTION OF THE PREFERRED EMBODIMENTS

First Embodiment

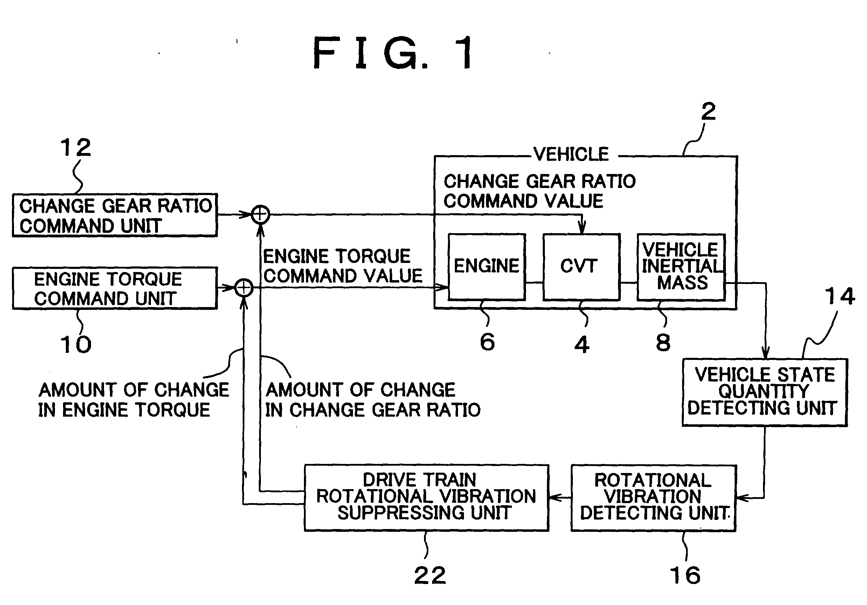

Fig. 1 schematically shows a vehicle drive train rotational vibration control apparatus constructed according to the present invention. Referring to Fig. 1, the first embodiment of the present invention will be now described.

Where the drive train rotational vibration control apparatus is a multi-input system, the interference between inputs received by the apparatus causes a serious problem especially in a continuously variable transmission whose change gear ratio continuously changes. Thus, the first embodiment of the present invention is directed to the case where the motor vehicle 2 to be controlled is equipped with a continuously variable transmission 4.

The control apparatus of the present embodiment is intended to overcome deterioration in control performance resulting from variations in various factors that can affect rotational vibration. To this end, it is required to design a control system in view of these variations. Such a control system is difficult to realize with feed-forward control as employed in known systems, but may be suitably designed with feedback control. For this reason, the control apparatus of the present embodiment employs feedback control.

The present apparatus aims at suppressing or reducing fluctuations in the torque of the drive shaft or fluctuations in the acceleration as measured in the longitudinal direction of the vehicle, which fluctuations arise due to rotational vibration. Control inputs applied to an object to be controlled are an engine torque command value, such as a throttle opening or a fuel injection amount, with which the engine torque can be controlled, and a change gear ratio of the continuously variable transmission 4. Although it is desirable to use the torque of the drive shaft as an observation quantity that is observed from the object to be controlled, a torque sensor is not normally installed on the vehicle. In this case, therefore, it is possible to employ a method of estimating an observation quantity by means of an observer, or more practically, to employ a method of using, as an observation quantity, the speed of rotation of an input shaft (or an output shaft) of the continuously variable transmission, which speed can be easily obtained.

In addition to the continuously variable transmission 4, the motor vehicle 2 includes an engine 6 that supplies power to the continuously variable transmission 4, and a vehicle inertial mass 8 that is driven upon receipt of a power output from the continuously variable transmission 4. An engine torque command value, as a control input applied to the engine 6, is generated from an engine torque command unit 10. A change gear ratio, as a control input applied to the continuously variable transmission 4, is generated from a change gear ratio command unit 12.

A vehicle state quantity detecting unit 14 detects at least one of vehicle state quantities, such as output shaft torque, vehicle acceleration as measured in the longitudinal or vehicle running direction, speed of rotation of the input shaft of the continuously variable transmission, speed of rotation of the output shaft of the continuously variable transmission, and engine torque, as an observation quantity or quantities. The vehicle state quantity detecting unit 14 may be designed to directly obtain an observation quantity by means of a sensor, or calculate a desired observation quantity based on directly obtained measurement values.

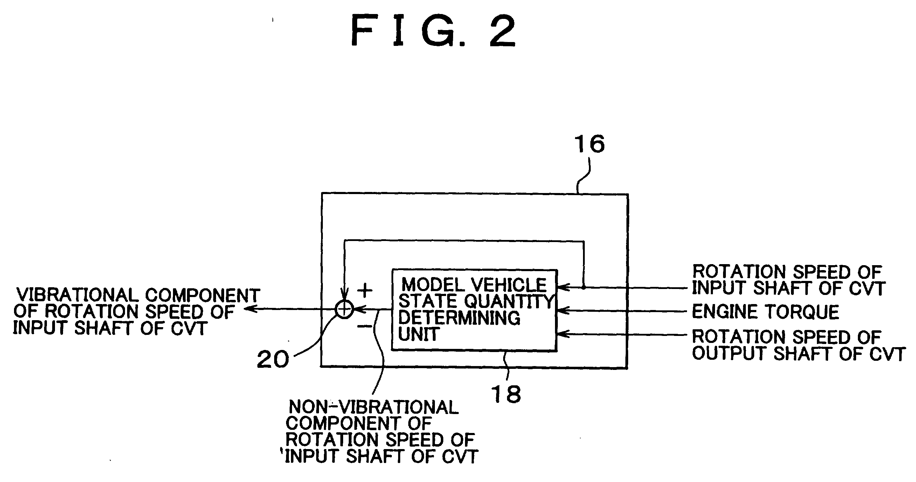

A rotational vibration detecting unit 16 detects a vibrational component of rotational vibration of a vehicle drive train based on the vehicle state quantity observed by the vehicle state quantity detecting unit 14. In one method of detecting a vibrational component of rotational vibration, a rigid model that is free from rotational vibration is used as a physical model of the drive train. Fig. 2 is a schematic view illustrating an example of the configuration of the rotational vibration detecting unit 16 that operates according to this method. A model vehicle state quantity determining unit 18 uses vehicle state quantities (the speed of rotation of the input shaft of the continuously variable transmission, the speed of rotation of the output shaft of the continuously variable transmission, and engine torque in the example of Fig. 2) generated from the vehicle state quantity detecting unit 14, so as to determine a certain vehicle state quantity (the speed of rotation of the input shaft of the continuously variable transmission in Fig. 2) based on the rigid model. The certain vehicle state quantity generated from the model vehicle state quantity determining unit 18 involves no vibrational component of rotational vibration. Thus, a non-vibrational component of the rotation speed of the input shaft of the continuously variable transmission is obtained from the model vehicle state quantity determining unit 18. A mixer 20 compares the rotation speed of the input shaft of the continuously variable transmission including the vibrational component, which is transmitted from the vehicle state quantity detecting unit 14, with the non-vibrational component from the model vehicle state quantity determining unit 18. The mixer 20 then extracts a vibrational component of rotational vibration, and outputs the extracted component to a drive train rotational vibration suppressing unit 22 that is disposed in the later stage.

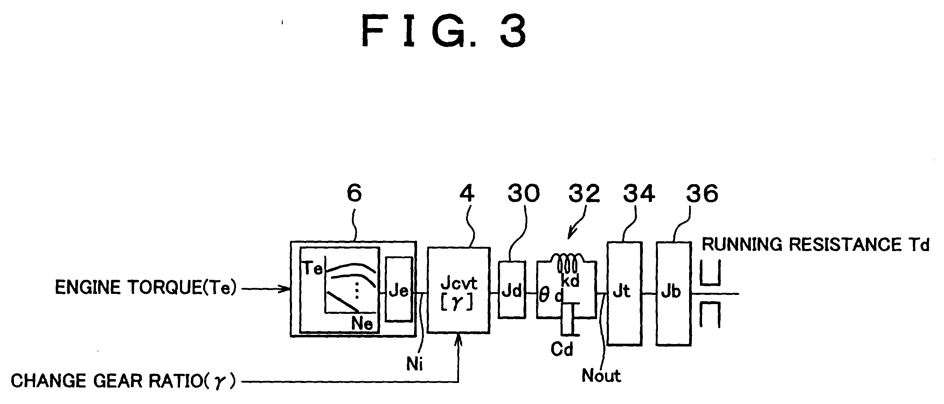

A simplified physical model is illustrated in the schematic view of Fig. 3 for the purpose of explaining the rigid model as mentioned above. A command value indicative of engine torque Te is applied from the engine torque command unit 10 to the engine 6, and a combination of the engine torque Te and engine speed Ne that provides the maximum fuel efficiency is selected as an operating point. Je in Fig. 3 represents the moment of inertia of the engine. A command value indicative of a change gear ratio γ is applied from the change gear ratio command unit 12 to the continuously variable transmission 4. The moment of inertia $J_{CVT}$ of the continuously variable transmission 4 depends upon the change gear ratio γ. The input shaft of the continuously variable transmission 4 is connected to the engine 5, and is caused to rotate at a rotation speed Ni. The output of the continuously variable transmission 4, on the other hand, is transmitted to a drive shaft 32 via a differential gear 30 (moment of inertia Jd), and further to wheels 34 (moment of inertia Jt), whereby the vehicle body 36 (equivalent moment of inertia Jb) is driven against the running resistance torque Td. The drive shaft 32 has a damper coefficient Cd and a spring modulus Kd. In the simplified model explained herein, the spring modulus Kd of the drive shaft 32 comprehensively represents a spring system of the whole drive train. The following equations of motion are satisfied or established with respect to the simplified physical model of the drive train.

$$2\pi (Je + J_{CVT} + Jd) \dot{N}i = \{Te - (Kd\,\theta d + Cd\,\dot{\theta} d) / (\gamma\,\lambda r\,\lambda d)\} \tag{1}$$

$$\dot{\theta} d = 2\pi\{Ni / (\gamma\,\lambda r\,\lambda d) - Nout\}$$

$$2\pi(Jt+Jb)\dot{N}out = \{(Kd\theta d + Cd\dot{\theta} d) - Td)\}$$

where λr, λd and θd represent a reduction ratio of a reduction gear of the continuously variable transmission 4, a reduction ratio of the differential gear 30, and angle of torsion of the drive shaft 32, respectively. Also, the speed of rotation measured at the output end of the drive shaft 32 is defined as the rotation speed Nout of the output shaft of the continuously variable transmission 4.

The rigid model is obtained by making (Kd θd + Cd θd) constant in the above-indicated expressions (1):

$$Kd\,\theta d + Cd\,\dot{\theta} d = \text{constant} \tag{2}$$

As another method of detecting a vibrational component of rotational vibration, it is possible to use an observer relating to the vibrational component. In this method, a vibrational component model that represents a vibrational component is obtained through variable transformation in the physical model of the drive train as expressed by the spring, mass and damper in the above expressions (1).

More specifically, the physical model as indicated by the above expressions (1) can be represented by a state equation (A) as follows:

$$\dot{x} = Ax + Bu \tag{A}$$

$$y = Cx + Du$$

where x is state variable and is equal to $[Ni, \theta d, Nout]^T$, u is engine torque command value Te, or rotation speed Ni of the input shaft of the CVT, or rotation speed Nout of the output shaft of the CVT, (or may be a change gear ratio command value $\gamma$), and y is rotation speed Ni of the input shaft of the CVT. The state variable is transformed according to the expression (B) below, so that the state equation is converted into a Modal type canonical state space representation as indicated by the expression (C) below (in which matrix A is a diagonal matrix in which its eigenvalues are arranged diagonally). This makes it possible to separate a vibrational model (in which the eigenvalues of matrix A are imaginary numbers) from a non-vibrational model (in which the eigenvalues of matrix A are real numbers) on the state space representation. In this manner, a design model from an input, such as an engine torque command value, to a vibrational component of the rotation speed of the input shaft of the CVT can be obtained as indicate

$$\begin{bmatrix} x_1 \\ x_2 \end{bmatrix} = Tx \qquad \cdots (B)$$

d by the expression (D) below. where T is transformation matrix, $x_1$ is state variable for a model of a vibrational component of the rotation speed of the input shaft of the CVT, and $x_2$ is a state variable for a rigid model.

$$\begin{bmatrix} x_1 \\ x_2 \end{bmatrix} = \begin{bmatrix} A_1 & 0 \\ 0 & A_2 \end{bmatrix} \begin{bmatrix} x_1 \\ x_2 \end{bmatrix} + \begin{bmatrix} B_1 \\ B_2 \end{bmatrix} u$$

$$y = [C_1 \quad C_2] \begin{bmatrix} x_1 \\ x_2 \end{bmatrix} + D u \qquad \cdots (C)$$

$$\begin{bmatrix} A_1 & 0 \\ 0 & A_2 \end{bmatrix} = TAT^{-1}, \qquad \begin{bmatrix} B_1 \\ B_2 \end{bmatrix} = TB, \quad [C1 \quad C2] = CT^{-1}$$

$$\dot{x}_1 = A_1 x_1 + B_1 u$$

$$y_1 = C_1 x_1 + D_1 u \qquad \cdots (D)$$

where $y_1$ is vibrational component of the rotation speed of the input shaft of the CVT.

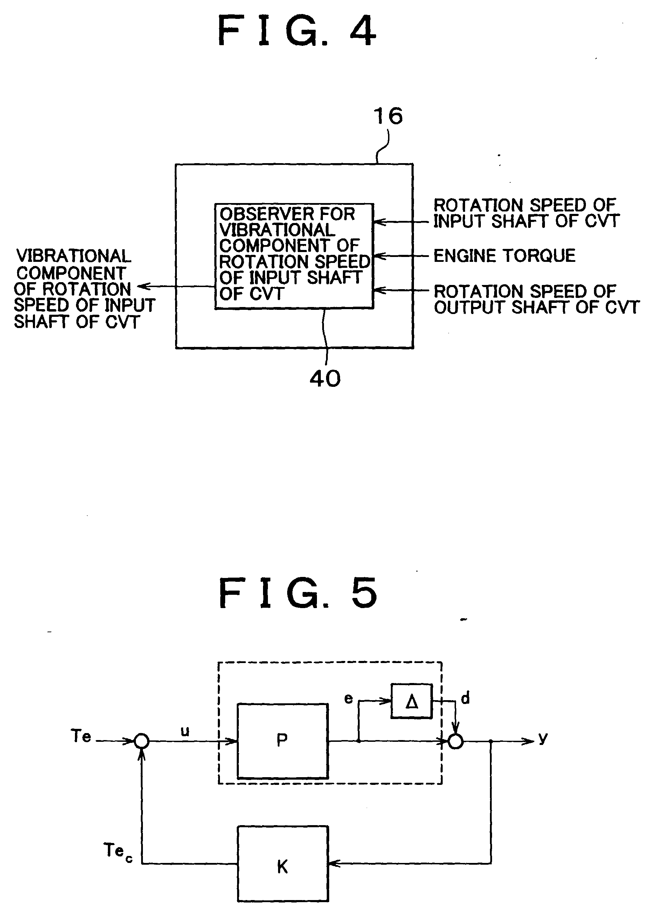

Fig. 4 is a schematic view illustrating one example of the structure of the rotational vibration detecting unit 16 that operates according to this method. In this example, an observer 40 observes a vibrational component of the rotation speed of the input shaft of the continuously variable transmission and outputs it to the drive train rotational vibration suppressing unit 22 disposed in the later stage.

The vehicle drive train rotational vibration suppressing unit 22 outputs one or both of the amount of change in the change gear ratio and the amount of change in the engine torque for suppressing rotational vibration, in accordance with the vibrational component extracted by the rotational vibration detecting unit 16 using the aforementioned rigid model or observer. The amount of change in the change gear ratio is added to the change gear ratio generated from the change gear ratio command unit 12. A value resulting from the addition is then defined as a change gear ratio command value to be applied to the continuously variable transmission 4. Similarly, the amount of change in the engine torque is added to the engine torque generated from the engine torque command unit 10. A value resulting from the addition is then defined as an engine torque command value to be applied to the engine 6. It is also possible to use an engine throttle opening command value and an amount of change in the throttle opening in place of the engine torque command value and the amount of change in the engine torque, respectively.

In the above manner, the control apparatus of the present embodiment is adapted to extract a vibrational component of rotational vibration and perform feedback control so as to suppress the vibrational component. This apparatus is simple in construction since there is no need to prepare in advance target values of the drive torque, the rotation speed of the input shaft of the continuously variable transmission, and the like, for suppressing rotational vibration, which values are to be set in accordance with various conditions (such as an accelerator pedal position, engine speed, and a vehicle speed) for reducing rotational vibration.

The vehicle drive train rotational vibration suppressing unit 22 is able to provide a good vibration suppressing effect by taking account of changes or variations in the transfer characteristics of rotational vibration. As one such method, H∞ gain schedule control may be employed. A structure using this method will be now described in detail.

Fig. 5 is a block diagram of a control system in the apparatus constructed as shown in Fig. 1. Referring to Fig. 5, "P" denotes an ideal vehicle system that principally consists of the engine 6 and the continuously variable transmission 4. The input "u" to the system is either a change gear ratio γ of the continuously variable transmission 4 or an engine torque Te. The output "e" of the system is a variable representing rotational vibration of the drive train, for example, a vibrational component of the rotation speed of the input shaft of the continuously variable transmission extracted by the rotational vibration detecting unit 16 in the present embodiment. In Fig. 5, "K" denotes a controller, and "Δ" represents modeling errors such as dynamics that are ignored in the vehicle system P , dynamics variations, chronological changes, and observation errors, which are expressed as multiplicative errors for the vehicle system P. In Fig. 5, "y" denotes an observation quantity, which is the speed of rotation of the input shaft of the continuously variable transmission in the present embodiment.

The first control object of the apparatus of the present embodiment is to minimize a vibration component of the rotation speed of the input shaft of the continuously variable transmission that represents rotational vibration, in the presence of disturbances "d" which are applied to the system as multiplicative errors. The second control object of the apparatus is to make a closed-loop system stable for any possible disturbance "d" that can be supposed. Thus, the control problem to be solved by the present embodiment is to derive a controller that accomplishes both of the above objects. Here, this control problem is replaced by an H∞ control problem, which is then solved.

Initially, the first control object is described using a constraint conditional expression for H∞ norm as indicated by the following expression (3).

$$\| W_1 S \|_\infty < 1 \tag{3}$$

where $S = 1/(1 + PK)$, and $W_1$ is a low-pass filter whose gain is flat until the frequency reaches the vicinity of the resonance frequency of rotational vibration.

The second control object is described using a constraint conditional expression for H∞ norm as indicated by the following expression (4).

$$\|W_2 T\|_\infty < 1 \tag{4}$$

where $T = PK/(1 + PK)$, and $W_2$ is a high-pass filter including the gain of the error Δ, whose gain is flat in a frequency range higher than the resonance frequency of rotational vibration. The expressions (3), (4) may be rewritten into one conditional expression for H∞ norm as indicated by the expression (5).

$$\left\| \begin{array}{cc} W_1 & S \\ \\ W_2 & T \end{array} \right\|_\infty < 1 \qquad \ldots (5)$$

The controller K can be calculated by solving the H∞ control problem that satisfies the expression (5). This problem is known as a problem of so-called mixing sensitivity.

The object to be controlled is represented by a nonlinear equation with respect to the change gear ratio γ, as indicated by the expressions (1). Here, the object to be controlled is regarded as a parameter-dependent model which uses the change gear ratio γ as a parameter. For example, models corresponding to the maximum and minimum values $\gamma_{max}$, $\gamma_{min}$ of the parameter γ are expressed by the following linear state equations (6), (7), respectively.

$$\dot{x} = A(\gamma_{min}) + B(\gamma_{min})u \tag{6}$$

$$y = C(\gamma_{min}) + D(\gamma_{min})u$$

$$\dot{x} = A(\gamma_{max}) + B(\gamma_{max})u \tag{7}$$

$$y = C(\gamma_{max}) + D(\gamma_{max})u$$

where $x = [Ni, \theta d, Nout]^T$, $u = Te$, and $y = Ni$.

By solving the aforementioned H∞ control problem with respect to the equations (6), a controller for $\gamma_{min}$ is given by the following equations (8).

$$\dot{x}_{C1} = A_{C1}x_{C1} + B_{C1}y \tag{8}$$

$$y = C_{C1}x_{C1} + D_{C1}u$$

Similarly, by solving the aforementioned H∞ control problem with respect to the equations (7), a controller for $\gamma_{max}$ is given by the following equations (9).

$$\dot{x}_{C2} = A_{C2}x_{C2} + B_{C2}y \tag{9}$$

$$y = C_{C2}x_{C2} + D_{C2}u$$

By linearly interpolating both the controllers for $\gamma_{min}$, $\gamma_{max}$, it is possible to derive a gain schedule controller corresponding to an arbitrary value $\gamma$ as represented by the following expressions (10). Parameter $\theta$ is equal to $(\gamma - \gamma_{min})$ / $(\gamma_{max} - \gamma min)$, and $x_{C1}$, $x_{C2}$ and $x_C$ are state quantities of the controller.

$$\dot{x}_C\{(1-\theta)A_{C1} + \theta A_{C2}\}x_C + \{(1-\theta)B_{C1} + \theta B_{C2}\}y \tag{10}$$

$$y = \{(1 - \theta)C_{C1} + \theta C_{C2}\}x_C + \{(1 - \theta)D_{C1} + \theta D_{C2}\}y$$

As a method of obtaining the aforementioned gain schedule controller, it is proposed to find a solution through resolution into the problem of a linear matrix inequality (LMI) (IEEE Transaction on Automatic Control, Vol. 40, No. 5, 1995, p. 853-864).

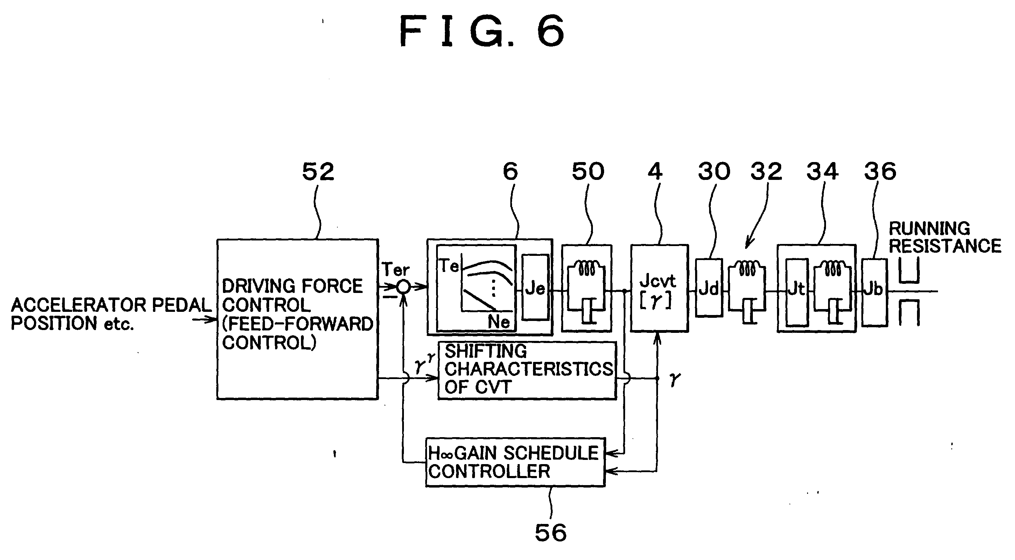

Next, the control performance of the thus obtained H∞ gain schedule controller will be described. Fig. 6 is a block diagram showing a simulation model of a vehicle that is constructed as including an engine and a continuously variable transmission. In this model, dynamics of the engine and continuously variable transmission are taken into consideration. In Fig. 6, the same reference numerals as used in Fig. 3 are used for identifying elements that are identical with the elements constituting the physical model of Fig. 3, and no detailed description will be provided for these corresponding elements. In the model shown in Fig. 6, a fluid clutch 50 is provided between the engine 6 and the continuously variable transmission 4 for permitting or inhibiting power transmission between the engine 6 and the transmission 4. A driving force control unit 52 receives inputs such as an accelerator pedal position, and outputs an engine torque command value applied to the engine 6 and a parameter $\gamma r$ relating to the change gear ratio of the continuously variable transmission 4, based on the inputs thus received. A change gear ratio $\gamma$ corresponding to the parameter $\gamma r$ is determined in accordance with characteristics of the continuously variable transmission. This value $\gamma$ is transmitted to the continuously variable transmission 4 and also to an H∞ gain schedule controller 56. The H∞ gain schedule controller 56 receives the rotation speed Ni of the input shaft of the continuously variable transmission as well as the change gear ratio $\gamma$. Based on the controller which varies depending upon $\gamma$ as indicated by the expressions (10), the H∞ gain schedule controller 56 determines an amount of change in the engine torque that corresponds to a vibrational component included in the rotation speed Ni of the input shaft of the continuously variable transmission.

The above simulation model is used for performing control for suppressing rotational vibration during shifting of the transmission. In order to clearly distinguish the effect provided by the control method of the present invention from the effect provided by a conventional control method, simulation was conducted according to two control methods. In the first control method, which is a conventional control method, feed-forward control is performed so that target values of engine torque and change gear ratio for achieving driving force estimated through depression of an accelerator pedal by the driver are set to values with which rotational vibration can be suppressed. In the second control method, the aforementioned H∞ gain schedule control (feedback control) peculiar to the present invention is performed in addition to the first control method. The H∞ gain schedule controller 56 is operated only in the second control method.

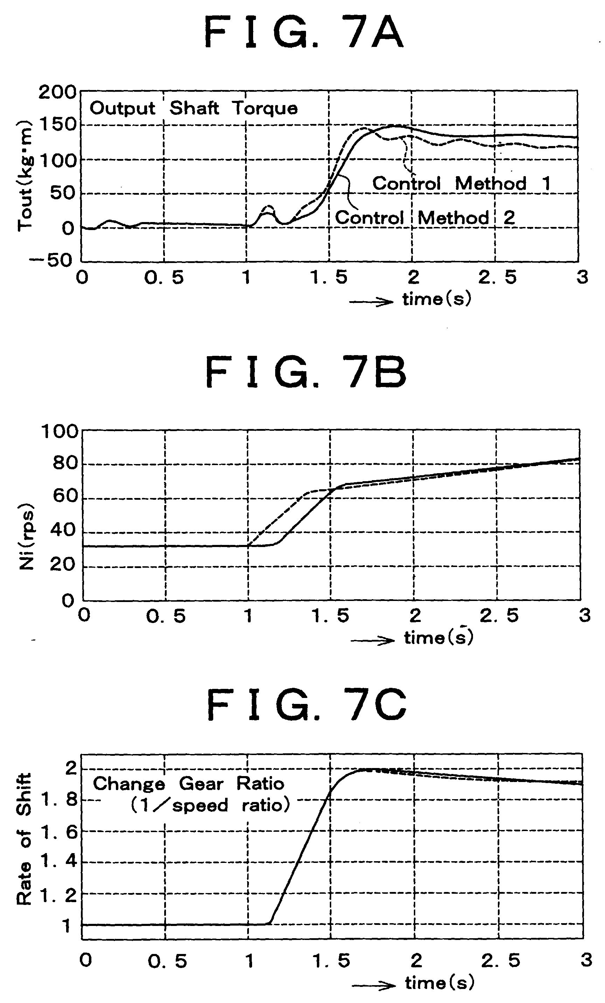

Figs. 7A - 7C show results of simulation during shifting of the transmission in an ideal control system wherein there are no changes in the object to be controlled. Figs. 7A, 7B and 7C are graphs respectively showing changes in torque Tout of the output shaft, rotation speed Ni of the input shaft of the continuously variable transmission, and change gear ratio γ ( =/speed ratio), with time. In Figs. 7A through 7C, dotted lines indicate the results of the first control method and solid lines indicate the results of the second control method. In this case, both the first and second control methods can accomplish driving force control with which rotational vibration is suppressed.

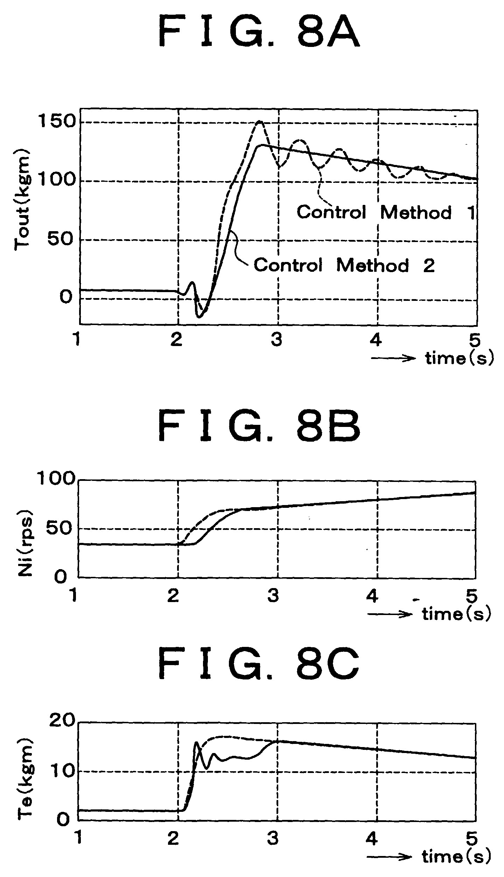

Figs. 8A - 8C show results of simulation in which the object to be controlled is subjected to changes (dynamics that have been ignored and changes in the dynamics are comprehensively regarded as 50% changes in each of the spring and damper of the drive shaft). Figs. 8A, 8B and 8C are graphs respectively showing changes in the torque Tout of the output shaft, rotation speed Ni of the input shaft of the continuously variable transmission, and the engine torque Te, with time. In Figs. 8A through 8C, dotted lines indicate the results of the first control method, and solid lines indicate the second control method. In this case, rotational vibration occurs in the first control method, whereas vibration is suppressed in the second control method.

In Figs. 7B and 8B, Ni is expressed by the number of revolutions per second. Although Tout and Te are expressed in units of kgf • m because of the specification of the simulator, they are converted into values in the SI unit system according to the relationship, 1kgf • m = 9.8N • m.

In the illustrated embodiment, the controller is derived according to the H∞ gain schedule method. However, the present invention is not limited to this particular method, but may employ any control theory for deriving the controller as long as it can take account of uncertainties and variations. Furthermore, while the engine torque is used as a control input in this embodiment, it is also possible to use a variable, such as a throttle opening or a fuel injection amount, with which the engine torque can be controlled, as a control input. Also, the change gear ratio of the continuously variable transmission may be employed as a control input, or both the engine torque and change gear ratio may be controlled at the same time, to provide similar effects.

The term "rotational vibration" is to be interpreted to include torsional vibration due to the rigidity of the drive train and vibration of accessories. Further, since torque control can be performed, it is also possible to suppress torque vibration or fluctuations using a signal obtained by detecting fluctuations in the torque, as well as fluctuations in the rotation speed.

Second Embodiment

In the illustrated embodiment, the control is performed by the gain schedule controller which uses the change gear ratio γ as a parameter as indicated by the expressions (10). In the present embodiment, on the other hand, a controller is derived from a model in which the change gear ratio is fixed or made constant. In this method, changes in the object to be controlled due to a varying change gear ratio are treated as a component of error Δ. The controller is constructed such that robustness for the error Δ is achieved despite the fixed change gear ratio γ.

More specifically, the H∞ control problem as indicated in the first embodiment is solved using the following state equations (11) instead of the expressions (6), (7), for a model of the object to be controlled wherein the change gear ratio γ is equal to γs ($\gamma_{min} \leq \gamma s \leq \gamma_{max}$).

$$\dot{x} = A(\gamma s)x + B(\gamma s)u \qquad (11)$$

$$y = C(\gamma s)x + D(\gamma s)u$$

Using the above state equations (11), a controller as represented by the following equations (12) is obtained by solving the H∞ control problem as indicated in the first embodiment. In the expressions (11), $x = [Ni, \theta d, Nout]^T$, u Te, and y = Ni.

$$\dot{x}_C = A_C x_C + B_C y \qquad (12)$$

$$y = C_C x_C + D_C u$$

where $x_c$ represents a state quantity of the controller. The controller expressed by the equations (12) is constant regardless of γ and is different in this respect from the controller of the first embodiment expressed by the equations (10). In this manner, the controller expressed by the equations (12) is designed using a model wherein the change gear ratio is fixed to γs. By ensuring robustness for changes in the change gear ratio in designing the controller, it can be expected to achieve the control performance close to that of the first embodiment.

The drive train rotational vibration control apparatus of the present invention is constructed such that only a vibrational component of rotational vibration of a vehicle state quantity, such as the torque of the output shaft, rotation speed of the input shaft of the transmission, or the rotation speed of the output shaft of the transmission, is extracted, and rotational vibration is suppressed by reducing the vibrational component. Thus, there is no need to provide target paths for the vehicle state quantities, resulting in simplified construction of the apparatus and a more rapid development of the apparatus. Further, since the apparatus of the present invention is constructed based on feedback control, it is possible to design a robust control system which takes account of changes in the response characteristics of the engine-transmission system. Thus, the vibration suppressing effect is kept stable even in the presence of changes in the response characteristics.

While the present invention has been described with reference to what are presently considered to be preferred embodiments thereof, it is to be understood that the present invention is not limited to the disclosed embodiments or constructions. On the contrary, the present invention is intended to cover various modifications and equivalent arrangements. In addition, while the various elements of the disclosed invention are shown in various combinations and configurations which are exemplary, other combinations and configurations, including more, less or only a single embodiment, are also within the spirit and scope of the present invention.

In a rotational vibration control apparatus for suppressing rotational vibration of a drive train of a motor vehicle, a vibrational component of rotational vibration of the drive train is detected, which component is included in a certain vehicle state quantity including at least one of the torque of an output shaft, acceleration in a longitudinal direction of the vehicle, the speed of rotation of an input shaft of a transmission, and the speed of rotation of an output shaft of the transmission, and at least one of the engine torque and the change gear ratio is changed based on the detected vibrational component of the rotational vibration.

**Claims**

1. A rotational vibration control apparatus for suppressing rotational vibration of a drive train of a motor vehicle, comprising:

   rotational vibration detecting means for detecting a vibrational component of rotational vibration of the drive train, said vibrational component being included in a certain vehicle state quantity comprising at least one of a torque of an output shaft, an acceleration in a longitudinal direction of the vehicle, a speed of rotation of an input shaft of a transmission, and a speed of rotation of an output shaft of the transmission; and
   rotational vibration suppressing means for changing at least one of an engine torque and a change gear ratio, based on the vibrational component of the rotational vibration detected by the rotational vibration detecting means.

2. A rotational vibration control apparatus according to claim 1, further comprising:

   vehicle state quantity detecting means for detecting at least one vehicle state quantity including the certain vehicle state quantity,
   wherein said rotational vibration detecting means comprises:
   model vehicle state quantity determining means for calculating the certain vehicle state quantity based on a rigid model of the vehicle drive train; and
   state quantity comparing means for determining the vibrational component of the rotational vibration by comparing the certain vehicle state quantity generated from the vehicle state quantity detecting means with the certain vehicle state quantity generated from the model vehicle state quantity determining means.

3. A rotational vibration control apparatus according to claim 1, wherein the rotational vibration detecting means is based on a physical model of the vehicle drive train and includes an observer that observes the vibrational component of the rotational vibration included in the certain vehicle state quantity.

4. A rotational vibration control apparatus according to any one of claims 1-3, wherein the rotational vibration suppressing means changes the engine torque or the change gear ratio in view of variations in response characteristics of the engine or the transmission, respectively.

5. A rotational vibration control apparatus according to any one of claims 1-4, wherein the vehicle has a control system, and wherein the rotational vibration suppressing means changes a controller of the control system depending upon the change gear ratio.

6. A rotational vibration control apparatus according to any one of claims 1-4, wherein the rotational oscillation suppressing means derives a controller of a control system based on a model in which the change gear ratio is fixed.

7. A control method for suppressing rotational vibration of a drive train of a motor vehicle, comprising the steps of:

detecting a vibrational component of rotational vibration of the drive train, said vibrational component being included in a certain vehicle state quantity comprising at least one of a torque of an output shaft, an acceleration in a longitudinal direction of the vehicle, a speed of rotation of an input shaft of a transmission, and a speed of rotation of an output shaft of the transmission; and

changing at least one of an engine torque and a change gear ratio, based on the vibrational component of the detected rotational vibration.

8. A control method according to claim 7, further comprising the step of:

detecting at least one vehicle state quantity including the certain vehicle state quantity,
wherein said step of detecting a vibrational component of rotational vibration comprises the steps of:
calculating the certain vehicle state quantity based on a rigid model of the vehicle drive train; and
determining the vibrational component of the rotational vibration by comparing the certain vehicle state quantity detected, with the certain vehicle state quantity calculated based on the rigid model of the vehicle drive train.

# F I G. 1

# FIG. 2

VIBRATIONAL COMPONENT OF ROTATION SPEED OF INPUT SHAFT OF CVT

ROTATION SPEED OF INPUT SHAFT OF CVT

ENGINE TORQUE

ROTATION SPEED OF OUTPUT SHAFT OF CVT

MODEL VEHICLE STATE QUANTITY DETERMINING UNIT

NON-VIBRATIONAL COMPONENT OF ROTATION SPEED OF 'INPUT SHAFT OF CVT

16

18

20

EP 1 097 834 A2

# F I G. 3

ENGINE TORQUE(Te) ⟶

CHANGE GEAR RATIO($\gamma$) ⟶

RUNNING RESISTANCE Td

EP 1 097 834 A2

# F I G. 4

OBSERVER FOR VIBRATIONAL COMPONENT OF ROTATION SPEED OF INPUT SHAFT OF CVT

16

40

ROTATION SPEED OF INPUT SHAFT OF CVT

ENGINE TORQUE

ROTATION SPEED OF OUTPUT SHAFT OF CVT

VIBRATIONAL COMPONENT OF ROTATION SPEED OF INPUT SHAFT OF CVT

# F I G. 5

Te

u

P

e

$\Delta$

d

y

$Te_c$

K

# F I G. 6

EP 1 097 834 A2

# FIG. 7A

Output Shaft Torque

Control Method 1

Control Method 2

Tout(kg·m)

200
150
100
50
0
-50

0    0.5    1    1.5    2    2.5    3
→ time(s)

# FIG. 7B

Ni(rps)

100
80
60
40
20
0

0    0.5    1    1.5    2    2.5    3
→ time(s)

# FIG. 7C

Change Gear Ratio
(1/speed ratio)

Rate of Shift

2
1.8
1.6
1.4
1.2
1

0    0.5    1    1.5    2    2.5    3
→ time(s)

# F I G. 8A

# F I G. 8B

# F I G. 8C